# EUROPEAN PATENT APPLICATION

(11) **EP 4 119 089 A1**
(43) Date of publication of application: **18.01.2023**
(21) Application number: 21185607.5
(22) Date of filing: 14.07.2021
(51) Int. Cl.: A61C 7/28

(54) **ORTHODONTIC BRACKET SYSTEM**

(71) Applicant: Anjary, Said, West Chester, OH 45069 (US)
(72) Inventor: Anjary, Said, West Chester, OH 45069 (US)
(74) Representative: Forresters IP LLP

(57) **Abstract**

A package opener comprises a handle having a first half and a second half. A plurality of blade cartridges are sandwiched between the first half and the second half, wherein the plurality of blade cartridges include at least one package opening blade cartridge, at least dual blade cartridge, and at least one envelope cutting blade cartridge. The package opening blade cartridge is configured at an operative bottom end of the handle. The dual blade cartridge is configured at an operative rear end of the handle. The envelope cutting blade cartridge is configured at an operative front end of the handle.

## Description

### CROSS-REFERENCE TO RELATED APPLICATIONS

This application is related to U.S. Patent Application Provisional Application Serial No. 62/982,125, entitled "ORTHODONTIC BRACKET SYSTEM", filed February 27, 2020 and U.S. Patent Application Serial No. 16/846,898 filed April 13, 2020, the contents of both of which are hereby incorporated by reference in their entirety for any purpose.

### TECHNICAL FIELD

The present disclosure relates generally to an orthodontic bracket system, and more particularly, to an orthodontic bracket system having a self-ligating configuration.

### BACKGROUND

Misaligned teeth or crooked teeth is one of the most commonly occurring disorder in children and young adults. While misaligned teeth is generally not a life threatening disorder and may even add a certain charm to ones' smile, not everybody with misaligned teeth may want to keep their teeth as they are. Some individuals may wish to have their teeth aligned as it may have a positive effect on their confidence. To this end, orthodontic bracket systems are developed in the art.

A typical orthodontic system includes a bracket that may be attached in the enamel of the teeth using an adhesive. The bracket may include a slot defined on the body of the bracket. One such bracket may then be attached to all the tooth requiring alignment. A wire is then fitted into the slots defined on the brackets and ligated thereto via conventional ligature means, including but not limited to resilient O-rings or fine metallic wires. The wire is fitted in and held by the brackets such that a corrective force is constantly applied on the teeth by the virtue of the wire being held within the bracket, thereby gradually displacing each teeth to its desired location. This displacement of all the tooth results in alignment of the tooth.

A disadvantageous aspect of such an orthodontic bracket system may be that they have a bulky configuration due to the usage of the separate and discreet ligature means, which may cause a lot of discomfort to the user. Another disadvantageous aspect may be that a user of such an orthodontic bracket system may need to have numerous visits to the dentist for maintaining and correcting the position of the ligature means on the bracket body. Yet another disadvantageous aspect of such an orthodontic bracket system is the difficulty in applying a separate ligature means to each bracket.

Self-ligating orthodontic brackets are therefore developed in the art for overcoming the aforementioned disadvantageous aspects of some conventional orthodontic bracket systems. These self-ligating orthodontic brackets typically employ the usage of a movable slide or a latch for holding the wire within the slot on the bracket. A disadvantageous aspect of these self-ligating orthodontic brackets is that they have a complicated construction, which directly impacts their price and affordability.

Accordingly, there is need of a self-ligating orthodontic bracket system that has a simple construction, is cost effective, and is easy to apply on a patient.

### SUMMARY

The present disclosure provides an orthodontic bracket system. The orthodontic bracket system, in accordance with an exemplary embodiment of the present invention, includes a bracket body. The bracket body includes a base configured for fitment on a teeth. A first plurality of wings is configured on the base and extends in an occlusal direction when the bracket body is assembled on the teeth. A second plurality of wings is configured on the base and extends in a gingival direction when the bracket body is assembled on the teeth. A slot is defined operatively between the first plurality of wings and the second plurality of wings. The orthodontic bracket system further includes a self-ligating cover. The self-ligating cover includes a first section, a second section, and a third section. The first section is configured to clip on the first plurality of wings. The second section is configured to fit over the second plurality of wings. The third section has a substantially flat configuration and extends operatively between the first and the second sections, wherein the first section, the second section, and the third section integrally define a body of the self-ligating cover.

The above summary contains simplifications, generalizations and omissions of detail and is not intended as a comprehensive description of the claimed subject matter but, rather, is intended to provide a brief overview of some of the functionality associated therewith. Other systems, methods, functionality, features and advantages of the claimed subject matter will be or will become apparent to one with skill in the art upon examination of the following figures and detailed written description.

Representative features are set out in the following clauses, which stand alone or may be combined, in any combination, with one or more features disclosed in the text and/or drawings of the specification.

According to the present invention there is provided an orthodontic bracket system comprising:
a bracket body comprising:
   a base configured for fitment on a teeth;
   a first plurality of wings configured on the base and extending in a gingival direction when the bracket body is assembled on the teeth;
   a second plurality of wings configured on the base and extending in an occlusal direction when the bracket body is assembled on the teeth; and
   a slot defined operatively between the first plurality of wings and the second plurality of wings; and
a self-ligating cover having:
   a first section configured to clip on the first plurality of wings;
   a second section configured to fit over the second plurality of wings; and
   a third section having a substantially flat configuration and extending operatively between the first and the second sections, wherein the first section, the second section, and the third section integrally define a body of the self-ligating cover.

Preferably each wing of the first plurality of wings has a dome shaped configuration.

Advantageously the first section of the self-ligating cover includes a plurality of dome shaped protrusions having a hollow configuration, and wherein the configuration of the plurality of dome shaped protrusions is complementary to the configuration of the first plurality of wings for facilitating snug and secure fitment between the first plurality of wings and the first section of the self-ligating cover.

Conveniently the first plurality of wings includes a pair of wings, and the first section of the self-ligating cover includes a pair of dome shaped protrusions.

Preferably each wing of the second plurality of wings includes an operative top surface having a substantially flat configuration, and an operative bottom surface having a substantially S-shaped configuration.

Conveniently the second plurality of wings includes a pair of wings.

Advantageously the second section of self-ligating cover has a substantially S-shaped configuration complementary to the configuration of the second plurality of wings for facilitating snug and secure fitment between the second plurality of wings and the second section of the self-ligating cover.

Preferably the arrangement further comprises a groove configured on the third section of the self-ligating cover.

Conveniently the first section is a step protruding from an inner surface of the self-ligating cover, the step having at least one pocket configured thereon in a spaced apart manner for fitment on each wing of the first plurality of wings.

Advantageously the second section is a step protruding from an inner surface of the self-ligating cover and configured to be positioned snugly between the wings of the second plurality of wings subsequent to the fitment of the self-ligating cover on the bracket body.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1A illustrates an isometric view of an orthodontic bracket system, according to one or more embodiments;
FIG. 1B illustrates a side view of an orthodontic bracket system, according to one or more embodiments;
FIG. 2 illustrates an isometric view of a bracket body used in the orthodontic bracket system, according to one or more embodiment;
FIG. 3A illustrates an isometric view of a self-ligating cover used in the orthodontic bracket system, according to one or more embodiment;
FIG. 3B illustrates an isometric view of a self-ligating cover used in the orthodontic bracket system, according to one or more embodiment;
FIG. 3C illustrates an isometric view of a self-ligating cover used in the orthodontic bracket system, according to one or more embodiment;
FIG. 3D illustrates an isometric view of a self-ligating cover used in the orthodontic bracket system, according to one or more embodiment;
FIG. 4 illustrates an isometric view of an orthodontic bracket system, according to one or more embodiments;
FIG. 5 illustrates an isometric view of a self-ligating orthodontic bracket system, according to one or more embodiments;
FIG. 6 illustrates an isometric view of a self-ligating orthodontic bracket system, according to one or more embodiments;
FIG. 7 illustrates an isometric view of a chain of self-ligating covers used in the self-ligating orthodontic bracket system, according to one or more embodiments;
FIG. 8 illustrates a sectional view of a self-ligating cover used in the orthodontic bracket system, according to one or more embodiments;
FIG. 9 illustrates a side view of the self-ligating cover used in the orthodontic bracket system, according to one or more embodiments; and
FIG. 10 illustrates a top view of the self-ligating cover used in the orthodontic bracket system, according to one or more embodiments.

### DETAILED DESCRIPTION THE DISCLOSURE

As generally used, "mesial" refers to a direction toward the middle of the patients arch and "distal" refers to a direction away from the middle of the patient's arch. "Occlusal refers to a direction toward the outer tips of the patient's teeth, while "gingival" refers to a direction toward the gums or gingiva. "Labial" refers to a direction toward the patient's lips or cheeks, while "lingual refers to a direction toward the patient's tongue.

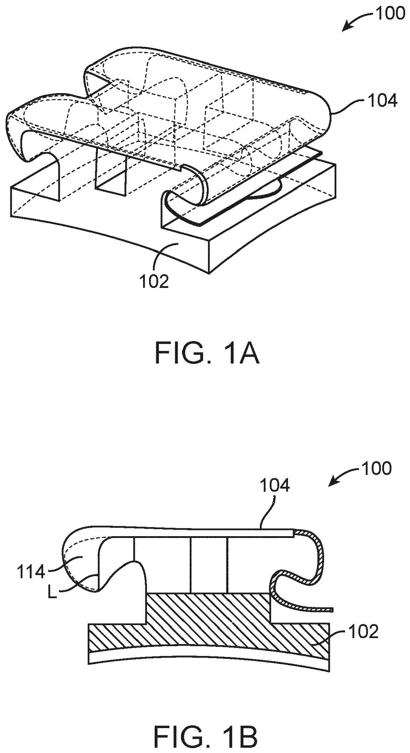

Fig. 1A and Fig. 1B illustrate different views of an orthodontic bracket system 100 (hereinafter referred to as system 100), in accordance with an embodiment of the present invention. The system 100 includes a bracket body 102 and a self-ligating cover 104 configured for fitment on the bracket body 102. An advantageous aspect of the self-ligating cover 104, in accordance with an embodiment of the present invention, is that the self-ligating cover 104 has been designed to have a removable configuration. More specifically, the removable configuration of the self-ligating cover 104 is more advantageous for both patients and orthodontists aesthetically

Another advantageous aspect of the self-ligating cover 104 is its versatility. Conventional self-ligating covers include mechanical slide or mechanical latch like arrangements for facilitating ligation of the wire within the bracket body. However, in accordance with at least one embodiment of the present invention, the self-ligating cover 104 may be designed for any conventional orthodontic bracket system and easily replace the usage of the conventional resilient O-rings or metal wires as ligature means. Such a configuration of the self-ligating cover 104 eliminates the need of having complicated constructions of bracket bodies involving the use of mechanical slide or mechanical latch like arrangement. As a result, the system 100 is relatively more cost effective than the conventional self-ligating orthodontic bracket systems.

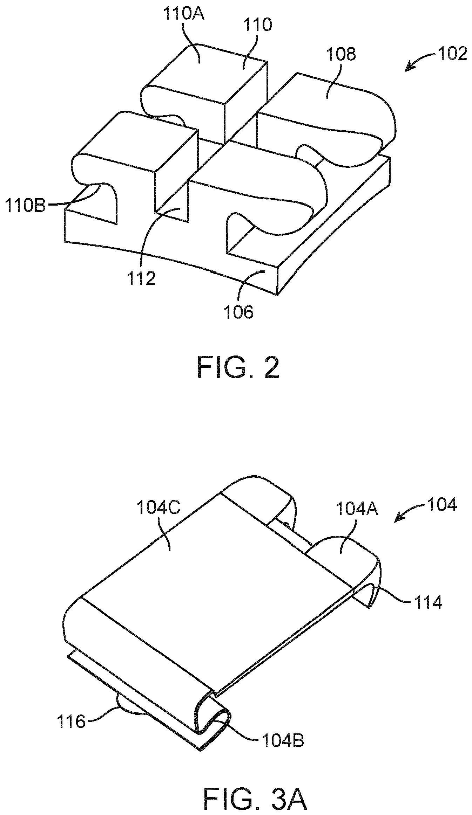

The construction and operation of the orthodontic system 100 is hereinafter described. Fig. 2 illustrates an isometric view of a bracket body used in the system 100. The system 100 includes the bracket body 102. The bracket body 102 includes a base 106 configured for fitment on a teeth. Generally, orthodontic adhesives are used for facilitating the fitment of the bracket body 102 on the enamel of the teeth. The bottom surface of the base 106 may be patterned for increasing the surface area thereof to maximize the surface area contact and interlocking with the orthodontic adhesive applied to the enamel of the teeth. Some examples of such patterning may include a knurled surface, ridges, pegs, grooves, particles such as regularly shaped particles including spheres, rods, and cones, and irregularly-shaped particles such as shards of ceramic material.

Referring to Fig. 2, the bracket body 102 includes a first plurality of wings 108. The first plurality of wings 108 is configured on the base 106 and extends in an occlusal direction when the bracket body 102 is assembled on the teeth. As seen in Fig. 2, the first plurality of wings 108 includes a pair of wings. However, it is to be noted that the number of wings in the first plurality of wings 108 is not limited to two, and the first plurality of wings 108 may include either more than two wings or less than two wings. The first plurality of wings 108 have a dome-like configuration.

The bracket body 102 further comprises a second plurality of wings 110. The second plurality of wings 110 is configured on the base and extends in a gingival direction when the bracket body 102 is assembled on the teeth. As seen in Fig. 2, the second plurality of wings 110 includes a pair of wings. However, it is to be noted that the number of wings in the second plurality of wings 110 is not limited to two, and the second plurality of wings 110 may include either more than two wings or less than two wings. The second plurality of wings 110 include an operative top surface 110A having a substantially flat configuration, and an operative bottom surface 110B having a substantially S-shaped configuration.

A slot 112 is defined operatively between the first plurality of wings 108 and the second plurality of wings 110. The slot 112 facilitates the accommodation of an archwire therewithin. The archwire may be held within the slot 112 via the self-ligating cover 104. The construction and configuration of the self-ligating cover 104 is hereinafter described.

FIG. 3A illustrates an isometric view of the self-ligating cover 104 used in the system 100. The self-ligating cover 104 (hereinafter also referred to as cover 104) includes a first section 104A, a second section 104B, and a third section 104C. The first section 104A is configured to clip on the first plurality of wings 108. As seen in Fig. 3A, the first section 104A of the cover 104 includes a plurality of dome shaped protrusions 114 having a hollow configuration. In accordance with an embodiment of the present invention, the configuration of the plurality of dome shaped protrusions 114 is complementary to the configuration of the first plurality of wings 108 for facilitating snug and secure fitment between the first plurality of wings 108 and the first section 104A of the self-ligating cover 104. Referring back to Fig. 1A and 1B, the fitment of the cover 104 on the bracket body 102 is illustrated. The protrusions 114 generally encapsulate the wings 108 up to substantially half the length of the entire wing 108 up to location "L", as illustrated in Fig. 1B. Such snug fitment of the protrusion 114 on the wing 108 prevents the section 104A of the cover 104 from moving out of position in an assembled configuration thereof.

The second section 104B of the cover 104 is configured to fit over the second plurality of wings 110. The second section 104B has an S-shaped configuration. Unlike the first section 104A, which has discreet individual protrusion 114 for fitment on the wings 108, the second section 104B is an S-shaped component extending along the entire width of the cover 104. The S-shaped configuration of the second section 104B is complementary to the S-shaped configuration of the operative bottom surface 110B of the second plurality of wings 110 for facilitating snug and secure fitment between the second plurality of wings 110 and the second section 104B of the self-ligating cover 104.

The third section 104C has a substantially flat configuration and extends operatively between the first and the second sections 104A, 104B, wherein the first section 104A, the second section 104B, and the third section 104C integrally define a body of the self-ligating cover 104.

The cover 104 further comprises a tongue 116. The tongue 116 is configured at an operative end of the second section 104B. The tongue 116 allows an orthodontist to grip the cover 104 while assembling the cover 104 on the bracket body 102.

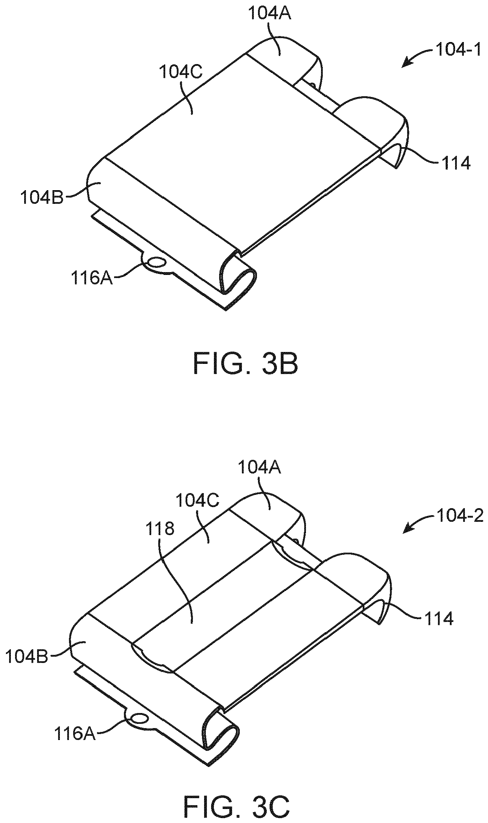

A cover 104-1, in accordance with another embodiment of the present invention, is illustrated in Fig. 3B. The construction and configuration of the cover 104-1 is similar to that of cover 104, which has been described above with reference to Fig. 3A. The only difference in the cover 104 and the cover 104-1 is the configuration of the tongue 116A. As such, the description of the like elements between the cover 104 and the cover 104-1 is not repeated herein for the sake of brevity of the present document. Referring to Fig. 3B, the tongue 116A includes a hole configured thereon. The provision of the hole on the tongue 116A allows the orthodontist to grip the cover 104 with an instrument.

It is to be noted that the covers 104, 104-1 are examples of passive self-ligating covers. More specifically, the covers 104, 104-1 only facilitate holding the arch wire inside the slot 112 on the bracket body 102. The covers 104, 104-1 do not apply any kind of pressure on the cable and only prevent the wire from coming out of the slot 112.

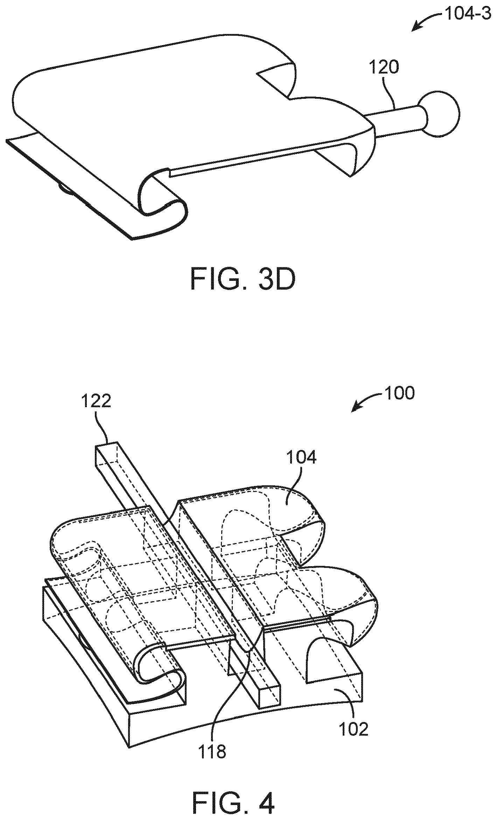

An active self-ligating orthodontic bracket system is one in which a constant pressure is applied on the archwire by the bracket. An exemplary embodiment of the cover 104-2 of active self-ligating type is illustrated in Fig. 3C. The construction and configuration of the cover 104-2 is similar to that of cover 104-1, which has been described above with reference to Fig. 3B. The only difference in the cover 104-2 and the cover 104-1 is the provision of the groove 118 on the third section 104C. As such, the description of the like elements between the cover 104-2 and the cover 104-1 is not repeated herein for the sake of brevity of the present document. The assembly of the cover 104-2 on the bracket 102 is illustrated in Fig. 4. As seen in Fig. 4, the bottom surface of groove 118 constantly applies a pressure on a wire 122 in an assembled configuration.

Fig. 3D illustrates an isometric view of the cover 104-3, in accordance with an alternate embodiment of the present invention. The construction and configuration of the cover 104-3 is similar to that of cover 104, which has been described above with reference to Fig. 3A. The only difference in the cover 104-3 and the cover 104 is the provision of the handle 120. As such, the description of the like elements between the cover 104 and the cover 104-3 is not repeated herein for the sake of brevity of the present document. The handle 120 may be provided on the cover 104-3 for facilitating the usage of intra oral elastic bands, which may be required at some point during the course of a patient's treatment.

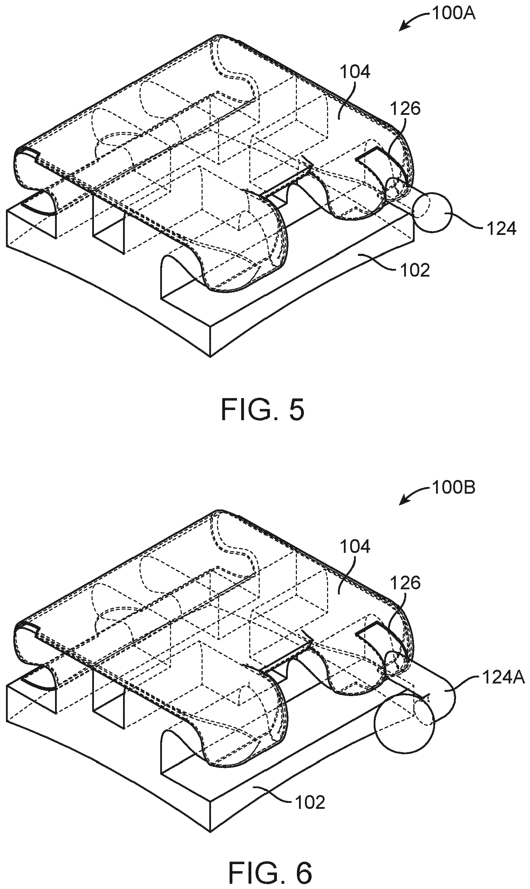

Another embodiment of an orthodontic bracket system 100A is illustrated in Fig. 5. The construction and configuration of the system 100A is similar to that of the system 100, which has been described above with reference to Fig. 1A thru Fig. Fig. 3B. The only difference in the system 100A and the system 100 is the provision of a hook 124 on the bracket body 102. As such, the description of the like elements between the system 100 and the system 100A is not repeated herein for the sake of brevity of the present document. Referring to Fig. 5, the hook 124 is provided on the bracket body 102 instead of the body of the cover 104 (see Fig. 3D). The hook 124 facilitates the use of intra oral resilient band that an orthodontist may be required to use during the course of a treatment. The cover 104 includes an aperture 126 for allowing the hook 124 to protrude thru the cover 104 in an assembled configuration of the cover 104 and the bracket body 102.

Another similar embodiment of the system, numbered as 100B, is illustrated in Fig. 6. In this embodiment, the only difference in relation to system 100A is that hook 124A has a substantially L-shaped configuration.

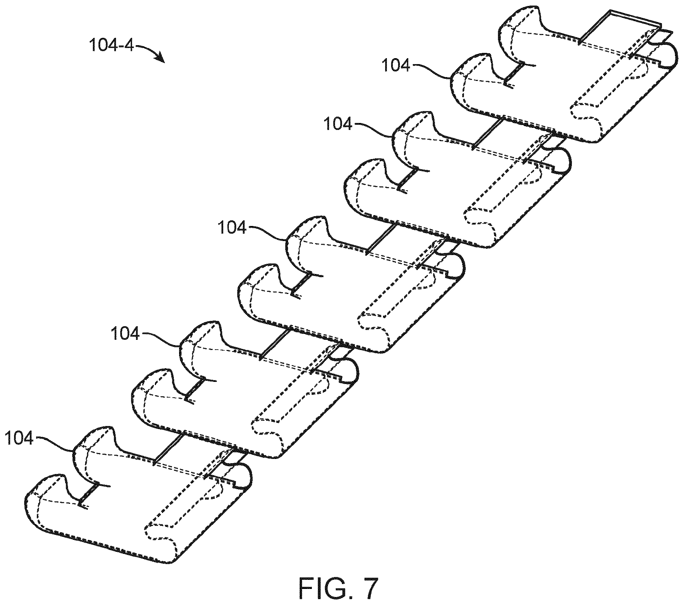

An exemplary application of the covers 104 in a form of an array 104-4, is illustrated in Fig. 7. As seen in Fig. 7, a plurality of covers 104 may be conjoined to form the array 104-4. The array 104-4 may be assembled on a plurality of brackets 102 that are stuck on a patient's tooth. Using the array 104-4, even the wire 122 may be camouflaged. An advantageous aspect of such an application of the array 104-4 is that it allows the bracket body 102 to be made of any metallic material, which provides better biomechanical properties relative to the plastic material used in conventional camouflage orthodontic bracket systems. The metallic bracket body 102 may be covered with the array 104-4, wherein the array 104-4 may be of a color that is similar to the color of the tooth enamel of the patient. As such, array 104-4 provides a relatively cost effective option to the conventional specialized camouflage orthodontic bracket systems.

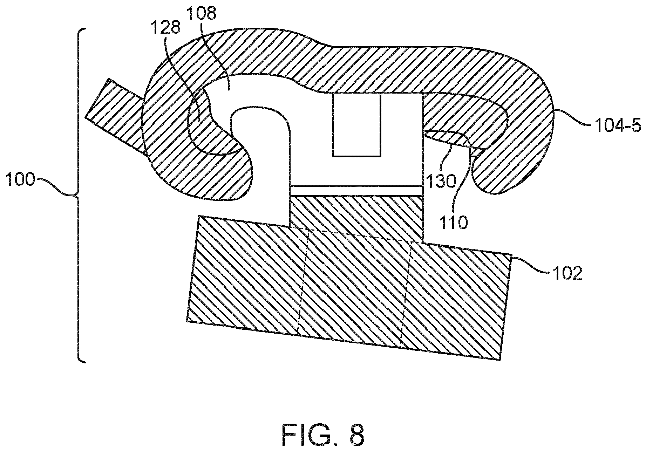

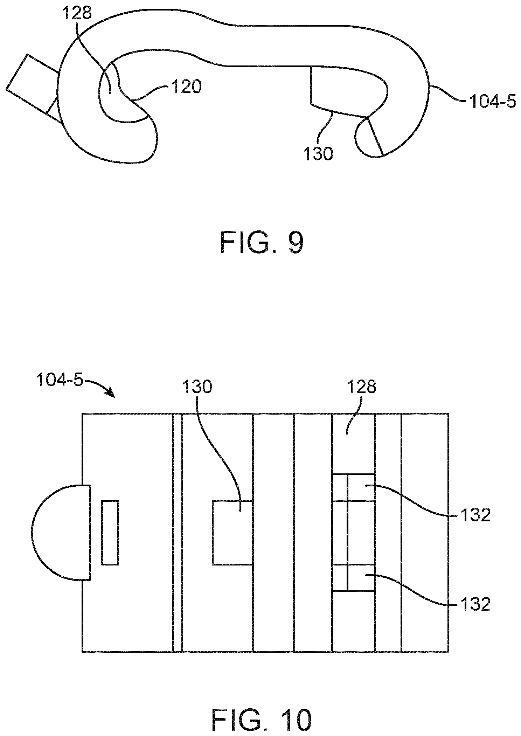

Another embodiment of the cover 104-5 is depicted in FIG. 8, wherein FIG. 8 illustrates a sectional view of the cover 104-5 being assembled on the bracket body 102. FIG. 9 illustrates a side view and FIG. 10 illustrates a top view of the cover 104-5, in accordance with an embodiment of the present subject matter. The construction and configuration of the cover 104-5 is similar to that of cover 104, which has been described above with reference to Fig. 3A. The only difference in the cover 104-5 and the cover 104 is the provision of a pair of steps 128, 130 configured on an inner periphery of the cover 104-5. As such, the description of the like elements between the cover 104 and the cover 104-5 is not repeated herein for the sake of brevity of the present document.

Referring to FIG. 8 through FIG. 10, the cover 104-5 has steps 128, 130 configured on the inner periphery thereof. More specifically, in the instant embodiment, the step 128 forms the first section of the cover 104-5 that is configured to fit on the first plurality of wings 108, while the step 130 is the second section of the cover 104-5 that is configured to fit between the second plurality of wings 110.

The step 128, in accordance with the instant embodiment, includes a pair of pockets 132. The pair of pockets 132 are configured in a spaced apart manner on the step 128, wherein each of the pockets 132 has a shape that is designed to snugly fit over the first plurality of wings 108. The step 130, in accordance with the instant embodiment, is a protrusion protruding from the inner surface of the cover 104-5. The step 130 is designed such that the step 130 is positioned snugly between the second plurality of wings 110. In an embodiment where the number of wings in the second plurality of wings 110 exceeds two, the number of steps 130 may be a number that is one less from the total number of wings in the second plurality of wings 110, and wherein such steps 130 may be arranged in a spaced apart manner to snugly fit between two consecutive wings of the second plurality of wings.

An advantageous aspect of providing step 130 and pockets 132 is that it eases the process of assembling the cover 104-5 on the bracket body 102. More specifically, the pockets 132 and the step 130 may act as alignment means to ensure that the cover 104-5 is properly assembled over the bracket body 102.

The method of applying the cover 104 to the bracket body 102 is hereinafter described. The bracket body 102 is assembled on the enamel of the teeth such that the first plurality of wings 108 face the occlusal end, while the second plurality of wings 110 face the gingival end. To assemble the cover on the bracket body, one may firstly assemble the second section 104B of the cover on the second plurality of wings 110 at the gingival end. The orthodontist may use the tongue provided at the second section of the cover 104 for optimal fitment of the second section 104B on the second plurality of wings 110. After the fitment of the cover 104 is achieved at the gingival end of the bracket body 102 on the second plurality of wings 110, the first section 104A of the cover 104 is pulled towards the occlusal end and fitted onto the first plurality of wings 108.

Similarly, to remove the cover 104 from the bracket body 116, the orthodontist is required to hold the tongue via an instrument and pull it out towards the occlusal end while going upward farther away from labial teeth surface and pushing it to the gingival end. Doing so opens up the cover 104 in relation to the bracket body 102.

The self-ligating cover, as described in the present disclosure, is of the type that can be entirely removed from the bracket body 102. Such a configuration allows to orthodontist to perform a variety of corrective procedures safely and easily. Furthermore, the bracket body 102 and the cover 104 may be of entirely different materials. For example, the bracket body may be made of a metallic material, while cover may be made of a non-metallic material. Furthermore, the cover 104 is such that it covers the entirety of the bracket body 102. Therefore, it is possible to camouflage the silver color (in case of a metal bracket body) of the bracket body by providing a cover 104 that is white in color. Another aspect of the cover 104 is that the cover 104 may be made to depict different colors. For example, the cover 104 may be made with colors of the rainbow flag or the United States national flag. This gives an aesthetic appeal to the system 100.

The orthodontic bracket can be manufactured using casting, metal injection molding, 3D printing, micromachining, any combination of generic mass production and customization techniques, and/or any direct digital manufacturing technique. The archwire can be bent by the operator, through a wire-bending robot, and/or through any other process that can set the shape of the wire to a pre-determined shape.

The various portions of the various brackets that have been described may be all part of a single integration piece of material, such as steel, aluminum, nickel-titanium, any other shape memory alloy, or any other metal alloy, ceramic, zirconia, dental composite, or any other plastic material. One or more of these components may instead be formed separately from the others.

The components, steps, features, objects, benefits, and advantages that have been discussed are merely illustrative. None of them, nor the discussions relating to them, are intended to limit the scope of protection in any way. Numerous other embodiments are also contemplated. These include embodiments that have fewer, additional, and/or different components, steps, features, objects, benefits, and advantages. These also include embodiments in which the components and/or steps are arranged and/or ordered differently.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

All articles, patents, patent applications, and other publications that have been cited in this disclosure are incorporated herein by reference.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular embodiments disclosed for carrying out this disclosure, but that the disclosure will include all embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described embodiments were chosen and described in order to best explain the principles of the disclosure and the practical application, and to enable others of ordinary skill in the art to understand the disclosure for various embodiments with various modifications as are suited to the particular use contemplated.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. An orthodontic bracket system comprising:
a bracket body comprising:
a base configured for fitment on a teeth;
a first plurality of wings configured on the base and extending in a gingival direction when the bracket body is assembled on the teeth;
a second plurality of wings configured on the base and extending in an occlusal direction when the bracket body is assembled on the teeth; and
a slot defined operatively between the first plurality of wings and the second plurality of wings; and
a self-ligating cover having:
a first section configured to clip on the first plurality of wings;
a second section configured to fit over the second plurality of wings; and
a third section having a substantially flat configuration and extending operatively between the first and the second sections, wherein the first section, the second section, and the third section integrally define a body of the self-ligating cover.

2. The orthodontic bracket system according to claim 1, wherein each wing of the first plurality of wings has a dome shaped configuration.

3. The orthodontic bracket system according to claim 1 or claim 2, wherein the first section of the self-ligating cover includes a plurality of dome shaped protrusions having a hollow configuration, and wherein the configuration of the plurality of dome shaped protrusions is complementary to the configuration of the first plurality of wings for facilitating snug and secure fitment between the first plurality of wings and the first section of the self-ligating cover.

4. The orthodontic bracket system according to any preceding claim, wherein the first plurality of wings includes a pair of wings, and the first section of the self-ligating cover includes a pair of dome shaped protrusions.

5. The orthodontic bracket system according to any preceding claim, wherein each wing of the second plurality of wings includes an operative top surface having a substantially flat configuration, and an operative bottom surface having a substantially S-shaped configuration.

6. The orthodontic bracket system according to any preceding claim, wherein the second plurality of wings includes a pair of wings.

7. The orthodontic bracket system according to any preceding claim, wherein the second section of self-ligating cover has a substantially S-shaped configuration complementary to the configuration of the second plurality of wings for facilitating snug and secure fitment between the second plurality of wings and the second section of the self-ligating cover.

8. The orthodontic bracket system according to any preceding claim, further comprising a groove configured on the third section of the self-ligating cover.

9. The orthodontic bracket system according to any preceding claim, wherein the first section is a step protruding from an inner surface of the self-ligating cover, the step having at least one pocket configured thereon in a spaced apart manner for fitment on each wing of the first plurality of wings.

10. The orthodontic bracket system according to any preceding claim, wherein the second section is a step protruding from an inner surface of the self-ligating cover and configured to be positioned snugly between the wings of the second plurality of wings subsequent to the fitment of the self-ligating cover on the bracket body.
